Europäisches Patentamt

European Patent Office

Office européen des brevets

(11) Veröffentlichungsnummer: **0 327 730 B1**

# EUROPÄISCHE PATENTSCHRIFT

(45) Veröffentlichungstag der Patentschrift: **19.02.92**

(51) Int. Cl.⁵: **B60T 5/00**

(21) Anmeldenummer: **88121752.5**

(22) Anmeldetag: **28.12.88**

(54) **Luftleitvorrichtung für Radbremsen eines Kraftfahrzeugs.**

(30) Priorität: **09.02.88 DE 3803801**

(43) Veröffentlichungstag der Anmeldung:
**16.08.89 Patentblatt 89/33**

(45) Bekanntmachung des Hinweises auf die
Patenterteilung:
**19.02.92 Patentblatt 92/08**

(84) Benannte Vertragsstaaten:
**DE ES FR GB IT SE**

(56) Entgegenhaltungen:
**DE-A- 3 525 627**
**DE-U- 8 114 958**

(73) Patentinhaber: **Dr.Ing.h.c. F. Porsche Aktiengesellschaft**
**Porschestrasse 42**
**W-7000 Stuttgart 40(DE)**

(72) Erfinder: **Preiss, Michael, Dipl.-Ing.**
**Hinter Der Mühle 10**
**W-7143 Vaihingen-Enz/Aurich(DE)**

# Beschreibung

Die Erfindung bezieht sich auf eine Luftleitvorrichtung für Radbremsen eines Kraftfahrzeugs nach dem Oberbegriff des Anspruchs 1.

Aus der DE-OS 35 25 627 ist eine Luftleitvorrichtung für Radbremsen bekannt geworden, die an der Unterseite des Fahrzeugs einen kanalartigen Lufteinlaß, gebildet aus einem Luftleitprofil, einem Frontspoiler, und ein in Fahrzeugquerrichtung verlaufendes Umlenkelement, umfaßt. Dieses Element ist unmittelbar dem Rad zugeordnet und nahe der Bremse unterhalb des Luftleitprofils vorgesehen und soll den ankommenden Luftstrom bzw. den Fahrtwind der Bremse zuleiten und somit eine Kühlung bewirken. Bei einer solchen Ausführung wird ein wesentlicher Anteil der zugeführten Luft in das Radhaus geblasen, bzw. nicht kanalisiert der Bremse zugeführt, so daß keine ausreichende Kühlung der Bremsscheiben gewährleistet ist. Außerdem wird durch die in das Radhaus geblasene Luft ein nachteiliger Vorderachsauftrieb erzielt.

Aufgabe der Erfindung ist es, eine Luftleitvorrichtung der im Oberbegriff des Anspruchs 1 ausgeführten Gattung zu schaffen, die den ankommenden Luftstrom aus dem Fahrtwind ohne größere Verluste direkt der Bremsscheibe zuführt und eine ausreichende Kühlung der Bremsscheibe gewährleistet ist.

Diese Aufgabe wird erfindungsgemäß durch die kennzeichnenden Merkmale des Anspruchs 1 gelöst. Weitere vorteilhafte Merkmale der Erfindung beinhalten die Unteransprüche.

Die mit der Erfindung hauptsächlich erzielten Vorteile bestehen darin, daß über einen z.B. am Radführungslenker befestigten Luftumlenkelement, das zu einem darüber angeordneten Luftfang- und Leitelement angestellt ist, eine Zwangsführung des ankommenden Luftstromes zur Bremse erzielt wird. Die Luft wird durch das unmittelbar am Bremsschutzblech anschließende Luftfang- und Leitelement ohne wesentliche Verluste einer Öffnung im Bremsschutzblech und somit direkt zur Bremsscheibe geleitet, auf die der Luftstrom axial auftritt.

Zur gezielten Luftführung ist das Luftfang- und Leitelement haubenförmig derart ausgeführt, daß die über das tiefer liegende Umlenkelement zugeführt Luft nicht zur Seite und nach oben entweichen kann, sondern durch die gewölbten Seitenwände optimiert in die Öffnung geblasen wird. Desweiteren wird erreicht, daß durch die Umleitung der Luft eine Reduzierung des Vorderachsauftriebs erreicht wird.

Ein Ausführungsbeispiel der Erfindung ist in der Zeichnung dargestellt und wird im folgenden näher beschrieben.

Es zeigen:

Fig. 1    eine schaubildliche Darstellung einer Luftleitvorrichtung im Bereich der Bremse am Fahrzeugrad,

Fig. 2    einen Längsschnitt nach der Linie II-II der Fig. 1 durch die Luftleitvorrichtung und

Fig. 3    einen Schnitt nach der Linie III-III durch ein Umlenkelement der Luftleitvorrichtung.

Eine Luftleitvorrichtung 1 für eine Radbremse 2 umfaßt im wesentlichen ein Luft- Umlenkelement 3 und ein Luftfang- und Leitelement 4. Das Umlenkelement 3 ist in Höhe eines Radführungslenkers angeordnet und mit diesem verbunden. Darüber ist das Luftfang- und Leitelement 4 vorgesehen, welches nahe der Bremsscheibe 11 am Federbein festgesetzt wird. Mit seinem Lufteintrittsbereich E ist es dem Umlenkelement 3 und mit seinem Luftaustrittsbereich A ist es einer Öffnung 12 im Bremsschutzblech 12a zugerichtet.

Das Umlenkelement 3 erstreckt sich in Querrichtung des Fahrzeugs und ist zum ankommenden Luftstrom 5 unter einem Winkel α zu einer horizontalen Ebene X-X derart angestellt, daß dieser Luftstrom 5 nach oben in Pfeilrichtung 6 umgeleitet wird. Benachbart dieses Elements 3, mit einem nur geringen Höhenabstand a, schließt sich das Luftfang- und Leitelement 4 an. Dieses ist haubenförmig ausgeführt und weist eine in einer Ebene mit der Fläche 7 des Umlenkelements 4 verlaufende Rückwandfläche 8 auf. Diese ist von zwei ineinanderlaufenden Wänden 9 und 10 begrenzt, welche in Fahrtrichtung F und entgegen dem Luftstrom 5 vorgezogen sind. Die Wände 9 und 10 sind vorzugsweise in sich gewölbt, so daß der ankommende Luftstrom 5 bzw. 5a gezielt ohne größere Verluste umgeleitet und der Öffnung 12 zuführbar ist.

Die der Öffnung 12 gegenüberstehende eine Wand 10 bildet eine etwa in Fahrzeuglängsrichtung verlaufende seitliche Begrenzung, wobei die andere Wand 9 einen oberen Abschluß des Elements 4 bildet. Beide Wände 9 und 10 laufen ohne Versatz ineinander über, bzw. bestehen aus einem Teil.

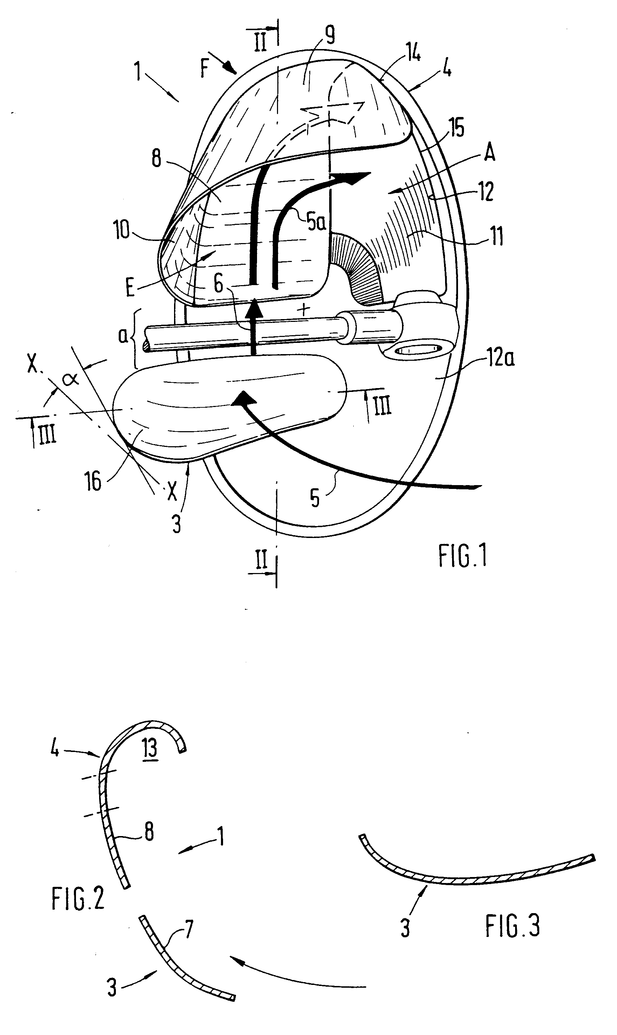

Die Wand 9 ist im Querschnitt nach der Linie II-II gemäß Fig. 1 etwa halbkreisförmig ausgeformt und bildet einen zur Öffnung 12 hin verlaufenden Kanal 13, dessen den Luftaustrittsbereich bildende Kante 14 zum Teil annähernd dem Verlauf des Umfangsrandes 15 der Öffnung 12 entspricht.

Das Umlenkelement 3 weist im Querschnitt, wie auch im Längsschnitt (Fig. 3) eine leichte Wölbung auf, wobei sein einer Endbereich 16 etwa der Einlaufrundung der Wand 10 des Luftfang- und Leitelements 4 entspricht.

Während der Fahrt des Fahrzeugs wird der Luftstrom evtl. durch einen Bugspoiler nach oben ins Fahrzeug gesogen und dort vom Umlenkelement 3 aufgefangen und gezielt nach oben zum Luftfang- und Leitelement 4 geleitet. Dieses haubenförmig gestaltete Element 4 führt dann den Luftstrom 5a ohne größere Verlust direkt der Öffnung 12 zu, hinter der die Bremsscheibe 11 angeordnet ist und bewirkt eine Kühlung dieser Bremsscheibe.

**Patentansprüche**

1. Luftleitvorrichtung für Radbremsen eines Kraftfahrzeugs mit einem entgegen dem ankommenden Luftstrom angestellten profilierten Umlenkelement, das ein fahrzeugseitig gehaltenes und in Fahrzeugquerrichtung verlaufendes Luftumlenkelement (3) umfaßt, das unterhalb eines benachbarten Luftfang- und Leitelements (4) angeordnet ist, dadurch gekennzeichnet, daß das Luftfang- und Leitelement (4) mit seinem Lufteintrittsbereich (E) dem Umlenkelement (3) zugerichtet ist und mit seinem Luftaustrittsbereich (A) einer Öffnung (12) im Bremsschutzblech (12a) gegenübersteht.

2. Vorrichtung nach Anspruch 1, dadurch gekennzeichnet, daß das Luftfang- und Leitelement (4) haubenförmig ausgeführt ist und eine in einer Ebene mit der Fläche (7) des Umlenkelements (3) verlaufende Rückwandfläche (8) aufweist, die an zwei angrenzenden Seiten von gewölbt ausgebildeten und entgegen dem Luftstrom (5) vorgezogenen Wänden (9, 10) begrenzt ist.

3. Vorrichtung nach den Ansprüchen 1 oder 2, dadurch gekennzeichnet, daß die eine gewölbte Wand (10) eine etwa in Fahrzeuglängsrichtung verlaufende seitliche Begrenzung bildet, welche der Öffnung (12) des Bremsschutzbleches (12a) gegenübersteht und in die weitere einen oberen Abschluß des Elements (4) bildende gewölbte Wand (9) einläuft.

4. Vorrichtung nach Anspruch 3, dadurch gekennzeichnet, daß die Wand (9) etwa im Querschnitt halbkreisförmig ausgebildet ist und ein in Fahrzeugquerrichtung ausgerichteten Kanal (13) darstellt.

5. Vorrichtung nach den Ansprüchen 3 und/oder 4, dadurch gekennzeichnet, daß die Wand (9) des Elements (4) eine etwa dem Rand (15) der Öffnung (12) im Bremsschutzblech (12a) entsprechenden Verlauf der Kante (14) im Luftaustrittsbereich (A) aufweist.

6. Vorrichtung nach einem oder mehreren der vorhergehenden Ansprüche, dadurch gekennzeichnet, daß das Luftumlenkelement (3) im Quer- und Längsschnitt gewölbt ausgebildet ist und der eine Endbereich (16) des Elements (3) etwa einer Einlaufrundung in die seitliche Wand (10) des Luftfang- und Leitelements (4) entspricht.

**Claims**

1. A spoiler device for wheel brakes of a motor vehicle, having a profiled deflection member arranged contrary to the oncoming air flow and comprising an air-deflexion member (3) held on the side of the vehicle extending in the transverse direction of the vehicle and arranged below an adjacent air-collecting and spoiler member (4), characterized in that the air-collecting an spoiler member (4) has its air-entry area (E) facing the deflexion member (3) and its own air-outlet area (A) opposite an opening (12) in the brake-protection plate (12a).

2. A device according to Claim 1, characterized in that the air-collecting and spoiler member (4) is constructed in the form of a hood and comprises a rear wall face (8) extending in one plane with the face (7) of the deflexion member (3) and bounded on two adjacent sides by walls (9, 10) constructed in a convex manner and extending forward towards the air flow (5).

3. A device according to Claim 1 or 2, characterized in that one convex wall (10) forms a lateral boundary which extends substantially in the longitudinal direction of the vehicle and which lies opposite the opening (12) in the brake-protection plate (12a) and merges with the further convex wall (9) forming an upper end of the member (4).

4. A device according to Claim 3, characterized in that the wall (9) is made substantially semicircular in cross-section and constitutes a channel (13) orientated in the transverse direction of the vehicle.

5. A device according to Claims 3 and/or 4, characterized in that in its air-outlet area (A) the wall (9) of the member (4) has the shape of the edge (14) substantially corresponding to the edge (15) of the opening (12) in the brake-protection plate (12a).

6. A device according to one or more of the preceding Claims, characterized in that the air-deflexion member (3) is made convex in the transverse and longitudinal section, and one end area (16) of the member (3) substantially corresponds to a rounded inlet In the lateral wall (10) of the air-collecting and spoiler member (4).

d'entrée de la paroi latérale (10) de la chicane de guidage et de retenue d'air (4)

**Revendications**

1. Chicane pour l'air de refroidissement des freins de roue d'un véhicule comprenant un élément déflecteur profilé monté de façon à être face au courant d'air incident et qui comprend un élément déflecteur d'air (3) monté sur le véhicule et orienté en direction transversale du véhicule, qui est disposé au-dessous d'une chicane de guidage et de retenue d'air (4) voisine, caractérisé en ce que la chicane de guidage et de retenue d'air (4) est tournée par sa région d'entrée d'air (E) vers l'élément déflecteur (3) et est disposée sur une ouverture (12) constituée dans la tôle protectrice de frein (12a) par sa région de sortie d'air (A).

2. Dispositif selon la revendication 1, caractérisé en ce que la chicane de guidage et de retenue d'air (4) est constituée sous la forme d'un capot et comprend une surface de paroi arrière (8) située dans le même plan que la surface (7) de l'élément déflecteur (3), la surface (8) étant limitée sur deux côtés voisins par des parois (9, 10) orientées face au courant d'air (5) et de forme incurvée.

3. Dispositif selon la revendication 1 ou 2, caractérisé en ce qu'une paroi incurvée (10) forme une limite latérale sensiblement en direction longitudinale du véhicule, limite qui est située face à l'ouverture (12) de la tôle protectrice de frein (12a) et qui se poursuit par l'autre paroi incurvée (9) formant la fermeture supérieure de l'élément (4).

4. Dispositif selon la revendication 3, caractérisé en ce que la paroi (9) est constituée sensiblement en section transversale sous la forme d'un demi-cercle et constitue un canal (13) orienté en direction transversale du véhicule.

5. Dispositif selon les revendications 3 et/ou 4, caractérisé en ce que la paroi (9) de l'élément (4) comprend une arête (14) dans la région de sortie d'air (A) dont la forme correspond sensiblement à celle du bord (15) de l'ouverture (12) de la tôle protectrice de frein (12a).

6. Dispositif selon l'une quelconque des revendications précédentes, caractérisé en ce que l'élément déflecteur d'air (3) a une forme incurvée en section transversale et longitudinale et en ce que la région d'extrémité (16) de l'élément (3) correspond sensiblement à l'arrondi

FIG.1

FIG.2

FIG.3